# EUROPÄISCHE PATENTANMELDUNG

(11) **EP 1 331 616 A1**
(43) Veröffentlichungstag der Anmeldung: **30.07.2003**
(21) Anmeldenummer: 02001619.2
(22) Anmeldetag: 23.01.2002
(51) Int. Cl.: G07F 19/00

(54) **Verfahren zum Betrieb eines Vergebührungssystems und Vergebührungssystem**

(71) Anmelder: SIEMENS AKTIENGESELLSCHAFT, 80333 München (DE)
(72) Erfinder: Eder, Reinhard, 85635 Siegertsbrunn (DE); Heine, Ronald, 15370 Fredersdorf (DE); Koch, Friedrich, 81929 München (DE)

(57) **Zusammenfassung**

Die Erfindung betrifft ein Verfahren zum Betrieb eines Vergebührungssystems zur Vergebührung von durch einen Dienstanbieter angebotenen Diensten und/oder Übertragungen von Dienstdaten über ein von einem Teilnehmer verwendetes Endgerät unter Nutzung eines Kommunikationsnetzes, wobei der Dienstanbieter extern des Kommunikationsnetzes angeordnet ist und das Vergebührungssystem auf in einer Heimatdatei des Kommunikationsnetzes abgespeicherte Teilnehmerprofildaten zugreift. Nach dem Zugriff auf die Teilnehmerprofildaten wird daraus die TCP/IP-Adresse eines Kontoservers ermittelt, der ein elektronisches Guthaben des Teilnehmers verwaltet. Des Weiteren wird ein Vergebührungssystem zur Durchführung des Verfahrens gezeigt.

## Beschreibung

Die Erfindung betrifft ein Verfahren zum Betrieb eines Vergebührungssystems gemäß dem Oberbegriff des Patentanspruchs 1 und ein Vergebührungssystem gemäß dem Oberbegriff des Patentanspruchs 7.

Dienstanbieter (Service-Provider) bieten Telekommunikationsdienste Dienstnutzern an, deren Endgeräte über ein Kommunikationsnetz mit den Dienstanbietern verbunden sind. Üblicherweise wird für die Nutzung eines TK-Dienstes und für die hierfür erforderliche Übertragung von Dienstdaten eine Nutzungsgebühr und eine Übertragungsgebühr verlangt. Um die Zahlungsabläufe zwischen dem Dienstanbieter und dem Dienstnutzer zu regeln, greifen Dienstanbieter, die den Zahlungsgang regeln, nämlich Payment Service Provider (PSP), auf ein Guthabenkonto (Prepaid-Konto) des Dienstnutzers zu und buchen die für die Nutzung des Dienstes anfallenden Nutzungs- und Übertragungsgebühren ab. Alternativ kann der PSP in einem Postpaid-Modus eine Rechnung über die anfallenden Nutzungsgebühren und Übertragungsgebühren erstellen.

Angebotene Dienste, die vergebührt werden sollen, können beispielsweise das Aufrufen von WAP-Seiten, das Herunterladen von Daten aus dem Internet und/oder das Bezahlen (Micropayment) mittels des mobilen Endgerätes sein.

In Mobilfunknetzen werden für jeden Teilnehmer in einer Heimatdatei (HLR = Home Location Register) Daten gespeichert, die u. a. darüber Auskunft geben, welche Netzwerkdienste dieser Teilnehmer in Anspruch nimmt. Ein Teil dieser Dienste legt fest, unter welchen Umständen die Dienste des intelligenten Netzes (IN = Intelligent Network) mit Unterstützung der CAMEL-Protokolle (CAMEL = Customers Applications for mobile enhanced Logic) für den Teilnehmer gestartet werden sollen.

Ein Intelligentes Netz wird durch die Erweiterung eines bestehenden Fernsprechnetzes gebildet. Neue, sogenannte "intel-ligente" Netzknoten und spezielle Netzkomponenten sowie zusätzliche Funktionen zur Erweiterung bestehender Vermittlungsstellen werden in das Netz eingebracht. Die Architektur des Intelligenten Netzes ergibt sich im wesentlichen aus der Funktion eines Service Switching Points (SSP), der als Erweiterung von bestehenden digitalen Orts- oder Fernvermittlungsstellen eingeführt wird, und von Service Control Points (SCP), die als "intelligente" Netzknoten für den Verbindungsaufbau im Rahmen von IN-Diensten genutzt werden.

Im Zusammenhang mit der IN/GSM-Integration wurde das CAMEL-Konzept entwickelt. CAMEL ist eine zu diesem Zweck vom European Telecommunication Standardisation Institut (ETSI) geschaffene Plattform, die das Grundkonzept intelligenter Netze (IN) in das GSM-Mobilfunksystem einführt. Mit CAMEL sollte es möglich sein, daß die GSM-Teilnehmer dieselben Dienste wie im Heimatmobilfinknetz (Home Public Land Mobile Network, HPLMN) benutzen können, auch wenn sie sich im weltweiten Roaming befinden.

Der Teil der Dienste, der festlegt, wie und welche Dienste des Intelligenten Netzes vom Teilnehmer beansprucht werden, wird CAMEL Subscription Indication (CSI) genannt und existiert in verschiedenen Ausprägungen wie O-CSI, D-CSI, T-CSI und weiteren. Bei den Diensten handelt es sich beispielsweise um Vorzugstarife, flexible Zuordnung der Gesprächsgebühren, Konferenzschaltungen, die Einrichtung virtueller privater Netze (VPN = Virtual Private Network) und geschlossener Benutzergruppen, gebührenfreie Rufnummern (0800) und persönliche Rufnummern.

In den CSI-Daten werden auch verschiedene weitere Informationen abgelegt, die nähere Auskunft über die Abwicklung der zugehörigen IN-Dienste geben. Als Beispiel kann hier das Abrechnungsverfahren genannt werden, d. h. ob einem Teilnehmer dessen Gebühren in einem Prepaid- oder Postpaid-Verfahren verrechnet werden. Wenn die Konten, von denen die Gebühren für die in Anspruch genommenen Dienste abgebucht werden sollen, über IN-Lösungen verwaltet werden, kann es zu Adressierungsproblemen kommen, insbesondere wenn die Konten über mehrere SCPs verteilt sind.

Der vorliegenden Erfindung liegt daher die Aufgabe zugrunde, ein Verfahren zum Betrieb eines Vergebührungssystems zur Verfügung zu stellen, welches die Gebühren für einen in Anspruch genommenen Dienst an den richtigen SCP weiterleitet, der das zu belastende Konto verwaltet. Desweiteren ist es Aufgabe der Erfindung, ein Vergebührungssystem zur Durchführung des Verfahrens zur Verfügung zu stellen.

Diese Aufgabe wird verfahrensseitig durch die Merkmale des Patentanspruchs 1 und vorrichtungsseitig durch die Merkmale des Patentanspruchs 7 gelöst.

Ein wesentlicher Punkt der Erfindung liegt darin, daß in einem Verfahren zum Betrieb eines Vergebührungssystems auf in einer Heimatdatei des Kommunikationsnetzes abgespeicherte Teilnehmerprofildaten zurückgreift. Das Verfahren dient dabei der Vergebührung von Diensten und/oder Übertragungen von Dienstdaten, die ein extern eines Kommunikationsnetzes angeordneter Dienstanbieter anbietet. Der Teilnehmer fordert diese Dienste über ein Endgerät unter Nutzung des Kommunikationsnetzes an. Das Vergebührungssystem ermittelt nach dem Zugriff auf die Teilnehmerprofildaten in der Heimatdatei aus diesen die Internet-Adresse bzw. TCP/IP-Adresse eines Kontoservers bzw. SCP, der ein elektronisches Guthaben des Teilnehmers verwaltet. Durch den Zugriff auf die Adreßinformation in der Heimatdatei des Kommunikationsnetzes entfällt die Notwendigkeit einer doppelten Datenhaltung zum einen für das Kommunikationsnetz und zum anderen für die Anbindung von externen Dienstanbietern.

Gemäß einer bevorzugten Ausführungsform werden eine Nutzungsgebühr und eine Übertragungsgebühr ermittelt, diese miteinander zu einer Gesamtgebühr addiert und aufgrund der Teilnehmerprofildaten eine Abbuchung der Gesamtgebühr von einem elektronischen Guthaben des Teilnehmers initiiert. Alternativ kann in einem Postpaid-Modus eine Rechnung für eine nachträgliche Gebührenabrechnung erstellt werden. Dadurch erhält der Teilnehmer die Information, welche Gebühren insgesamt für seine Dienstnutzung angefallen sind.

In einer bevorzugten Ausführungsform des erfindungsgemäßen Verfahrens wird die Gesamtgebühr vor der Nutzung eines Dienstes und/oder der Übertragung der Dienstdaten ermittelt. Auf diese Weise wird sichergestellt, daß eine Übertragung von Dienstdaten aufgrund eines nicht ausreichend gedeckten elektronischen Guthabens für die anfallende Übertragungsgebühr nicht abgebrochen wird. Vielmehr findet mittels des Vergebührungssystems bereits vor der Nutzung des Dienstes eine Überprüfung auf ausreichende Deckung des Guthabens statt, so daß eine Zahlung sowohl der Nutzungs- als auch der Übertragungsgebühr sichergestellt ist.

In einer vorteilhaften Ausführungsform des erfindungsgemäßen Verfahrens wird für den Zugriff auf die Heimatdatei eine Teilnehmerprofilabfrage von TCP/IP in SS7/MAP umgesetzt. Das SS7-Protokoll der ITU-T (Q.700) ist für die Signalisierung zwischen Netzknoten und Vermittlungsstellen (Interexchange Signalling) aller Art von digitalen Kommunikationsdiensten geeignet, beispielsweise schmal- und breitbandige Sprach- und Datendienste. Es bildet analog zu den untersten Schichten des OSI-Referenzmodells (der physikalischen Verbindungs- und Netzebene) die Basis für die Ankopplung und Implementierung von IN-Funktionen. Auf der Anwendungsebene werden der ISDN User Part (ISUP), der Telephony User Part (TUP) und der Mobile Application Part (MAP) für die Zeichengabe im ISDN- analogen Telefon- oder Mobilfunknetz unterschieden.

Ebenso werden die aus der Heimatdatei erhaltenen Teilnehmerprofildaten von SS7/MAP in TCP/IP umgesetzt. Dadurch wird ermöglicht, daß die in SS7/MAP verwalteten Daten in der Heimatdatei von der über Internet angebundenen Applikation verwendet werden können.

Bevorzugt erfolgt der Zugriff auf die Teilnehmerprofildaten in der Heimatdatei gemäß dem CAMEL-Standard. CAMEL ist die zu diesem Zweck geschaffene Plattform, die das Grundkonzept intelligenter Netze (IN) in das GSM-Mobilfunksystem einführt. Besonders bevorzugt ist, daß der Zugriff auf die Teilnehmerprofildaten in der Heimatdatei mittels einer Nachricht Anytime Subscriber Information (ATSI) erfolgt, die in dem CAMEL-Standard der Phase 3 genormt ist.

Vorteilhafte Aspekte des erfindungsgemäßen Vergebührungssystems ergeben sich entsprechend der vorstehenden Beschreibung der vorteilhaften Aspekte des erfindungsgemäßen Verfahrens.

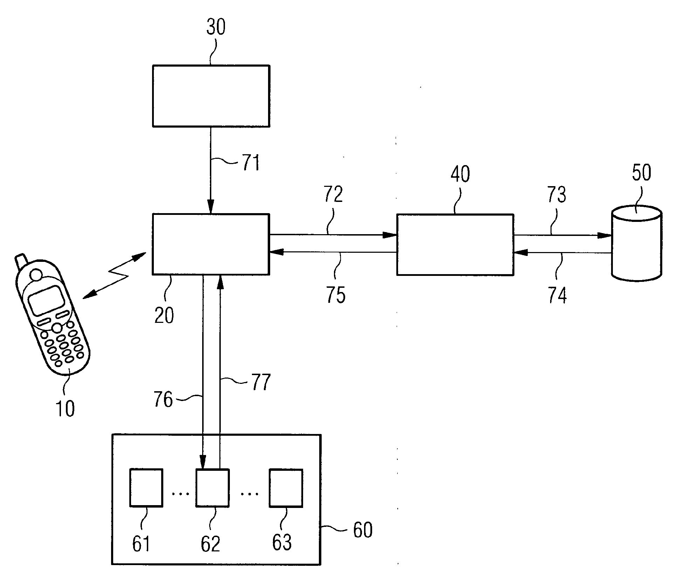

Vorteile und Zweckmäßigkeiten sind der nachfolgenden Beschreibung des Ausführungsbeispieles in Verbindung mit der Zeichnung zu entnehmen.

Die einzige Figur zeigt ein Vergebührungssystem mit einem Endgerät 10, einem Applikationsserver 20 und einem externen Server 30 eines Dienstanbieters. Der Applikationsserver 20 ist mit einem Adress-Resolution-Server (ARS) 40 verbunden, der einen speziellen SCP des intelligenten Netzwerkes darstellt. Der Adress-Resolution-Server 40 greift auf die im HLR 50 abgelegten Informationen bzw. Teilnehmerprofildaten zu.

Ferner ist der Applikationsserver 20 mit einer Prepaid-Plattform 60 verbunden. Die Prepaid-Plattform 60 ihrerseits umfaßt mehrere SCPs 61, 62, 63. Jeder dieser SCPs 61, 62, 63 kann dabei elektronische Guthaben für Teilnehmer des Mobilfunknetzes verwalten.

Im folgenden sei als Beispiel das Herunterladen von gebührenpflichtiger Daten aus dem Internet beschrieben. Nachdem der Teilnehmer die Daten ausgewählt und zum Herunterladen angefordert hat, fordert in einem ersten Schritt des erfindungsgemäßen Vergebührungsverfahrens der Server 30 eines Dienstanbieters den Applikationsserver 20 auf, aufgrund dieser angeforderten Dienstleistung eine Gebührenabbuchung vorzunehmen. Diese Aufforderung wird über Internet mittels TCP/IP und der Nachricht Charge_request 71 übermittelt.

Aufgrund der erhaltenen Daten des Teilnehmers (MSISDN = Mobile Subscriber ISDN) stellt der Applikationsserver 20 an den Adress-Resolution-Server 40 eine Adreßabfrage. Unter MSISDN wird hier eine technische Bezeichnung für die Nummer des Teilnehmers im Mobilfunknetz verstanden. Die beiden Server 20 und 40 kommunizieren über TCP/IP, und die Adreßabfrage erfolgt in der Nachricht ADDR_request 72.

Der ARS 40 setzt die über TCP/IP erhaltenen Anfrageparameter um und startet - wie in Mobilfunknetzen üblich - über SS7/MAP eine Informationsabfrage an das HLR 50. Dabei ermittelt der ARS 40 aus der ihm übermittelten Information MSISDN das HLR 50, auf dem die benötigten Teilnehmerprofildaten abgelegt sind. Die Abfrage erfolgt über die in CAMEL Phase 3 genormte Nachricht AnyTimeSubscriberInformation ATSI 73. Alternativ kann diese Nachricht auch durch eine Erweiterung der seit der CAMEL Phase 1 zur Verfügung stehenden Nachricht ATI ersetzt werden.

Das HLR 50 sendet die angeforderten Teilnehmerprofildaten zum ARS 40 mittels der Nachricht ATSI_ack 74 zurück. Anhand der empfangenen Teilnehmerprofildaten ermittelt der ARS 40, ob es sich um einen Teilnehmer handelt, dessen Gebühren im Prepaid-Verfahren abgerechnet werden. In diesem Fall ermittelt der ARS 40 die TCP/IP-Adresse der IN-Plattform bzw. des SCP, auf der das entsprechende Prepaid-Konto mit einem elektronischen Guthaben geführt wird.

Der ARS 40 setzt die entsprechenden Teilnehmerprofildaten in TCP/IP um und sendet diese an den Applikationsserver 20 mit der Nachricht ADDR_response 75 weiter. In dem Fall, daß die Abfragen ein Teilnehmerprofil ergaben, bei dem anfallende Gebühren in einem Postpaid-Verfahren abgerechnet werden, erstellt der Applikationsserver 20 ein Verrechnungsticket. Dieses wird in einem Nachbearbeitungsprozeß beim Mobilfunkbetreiber verarbeitet.

Falls es sich bei den angeforderten Teilnehmerprofildaten um einen Prepaid-Teilnehmer handelt, sendet der Applikationsserver 20 an den entsprechenden SCP, der das elektronische Guthabenkonto verwaltet, eine Abbuchungsanforderung CHRG_request 76. Nach erfolgreicher Abbuchung von dem elektronischen Konto sendet der SCP 62 an den Applikationsserver 20 eine Abbuchungsquittung CHRG_response 77.

Im konkreten Fall des gebührenpflichtigen Herunterladens von Daten aus dem Internet werden nun nach erfolgter Bezahlung die Daten dem Teilnehmer zur Verfügung gestellt bzw. gesendet.

In gleicher Weise kann das erfindungsgemäße Vergebührungsverfahren und -system bei bargeldlosen Zahlungsverfahren mit einem mobilen Endgerät dienen. Dann wird durch die Erstellung der Abbuchungsquittung die Beazhlung als erfolgt angesehen, und der Teilnehmer kann die angeforderte Leistung und/oder das zu bezahlende Produkt in Empfang nehmen.

An dieser Stelle sei darauf hingewiesen, daß alle oben beschriebenen Teile für sich alleine gesehen und in jeder Kombination, insbesondere die in der Zeichnung dargestellten Deteils, als erfindungswesentlich beansprucht werden. Abänderungen hiervon sind dem Fachmann geläufig.

## Patentansprüche

1. Verfahren zum Betrieb eines Vergebührungssystems zur Vergebührung von durch einen Dienstanbieter angebotenen Diensten und/oder Übertragungen von Dienstdaten über ein von einem Teilnehmer verwendetes Endgerät (10) unter Nutzung eines Kommunikationsnetzes, wobei der Dienstanbieter extern des Kommunikationsnetzes angeordnet ist und das Vergebührungssystem auf in einer Heimatdatei (50) des Kommunikationsnetzes abgespeicherte Teilnehmerprofildaten zugreift,
**dadurch gekennzeichnet, daß**
nach dem Zugriff auf die Teilnehmerprofildaten in der Heimatdatei (50) daraus die IP-Adresse eines Kontoservers (62) ermittelt wird, der ein elektronisches Guthaben des Teilnehmers verwaltet.

2. Verfahren nach Anspruch 1,
**dadurch gekennzeichnet, daß**
das Vergebührungssystem eine Nutzungsgebühr und eine Übertragungsgebühr ermittelt, diese miteinander zu einerGesamtgebühr addiert und aufgrund der Teilnehmerprofildaten eine Abbuchung der Gesamtgebühr von einem elektronischen Guthaben des Teilnehmers oder eine Rechnungsstellung für eine nachträgliche Gebührenabrechnung initiiert.

3. Verfahren nach Anspruch 2,
**dadurch gekennzeichnet, daß**
das Vergebührungssystem vor der Nutzung eines Dienstes und/oder der Übertragung der Dienstdaten die Gesamtgebühr ermittelt.

4. Verfahren nach einem der vorstehenden Ansprüche,
**dadurch gekennzeichnet, daß**
für den Zugriff auf die Heimatdatei (50) eine Teilnehmerprofilabfrage von TCP/IP in SS7/MAP umgesetzt wird und die aus der Heimatdatei (50) erhaltenen Teilnehmerprofildaten von SS7/MAP in TCP/IP umgesetzt werden.

5. Vergebührungssystem nach einem der vorstehenden Ansprüche,
**dadurch gekennzeichnet, daß**
der Zugriff auf die Teilnehmerprofildaten in der Heimatdatei 50 gemäß dem CAMEL-Standard erfolgt.

6. Vergebührungssystem nach einem der vorstehenden Ansprüche,
**dadurch gekennzeichnet, daß**
der Zugriff auf die Teilnehmerprofildaten in der Heimatdatei (50) mittels einer Nachricht Anytime Subscriber Information (73) erfolgt, die in dem CAMEL-Standard der Phase 3 genormt ist.

7. Vergebührungssystem zur Durchführung des Verfahrens nach einem der vorstehenden Ansprüche, welches umfaßt:
ein Kommunikationsnetz mit wenigstens einem Endgerät (10) und wenigstens einem Kontoserver (62), der ein elektronisches Guthaben des Teilnehmers verwaltet,
einen Server (30) eines Dienstanbieters, der mit dem Kommunikationsnetz verbunden ist und dessen Dienste das Endgerät (10) nutzt,
wobei das Kommunikationsnetz eine Heimatdatei (50) mit darauf abgespeicherten Teilnehmerprofildaten aufweist, auf die das Vergebührungssystem zugreift,
**dadurch gekennzeichnet, daß**
im Vergebührungssystem eine Serverfunktion vorgesehen ist, die nach dem Zugriff auf die Teilnehmerprofildaten in der Heimatdatei (50) daraus die TCP/IP-Adresse des Kontoservers (62) ermittelt.

8. Vergebührungssystem nach Anspruch 7, ferner
**gekennzeichnet durch**
einen Applikationsserver (20), der von einem Server (30) eines Dienstanbieters aufgrund einer Dienstnutzung **durch** einen Teilnehmer eine Gebührenanforderung mittels einer TCP/IP-Verbindung erhält und aufgrund dessen eine Teilnehmerabfrage weitersendet,
einen Address-Resolution-Server (40), der mittels einer TCP/IP-Verbindung mit dem Applikationsserver (20) kommunizieren kann und der Teilnehmerabfragen bzw. Teilnehmerprofildaten zwischen unterschiedlichen Protokollen zur Weiterleitung umsetzt,
eine Heimatdatei (50), die mit dem Adress-Resolution-Server (40) mittels einer SS7/MAP-Verbindung kommunizieren kann, einen Kontoserver (62), der mittels einer TCP/IP-Verbindung mit dem Applikationsserver (20) kommunizieren kann und ein elektronisches Guthaben verwaltet.
